# EUROPEAN PATENT APPLICATION

(11) **EP 3 895 794 A1**
(43) Date of publication of application: **20.10.2021**
(21) Application number: 20315173.3
(22) Date of filing: 15.04.2020
(51) Int. Cl.: B01J 13/04, B01J 13/00

(54) **METHOD AND SYSTEM OF PRODUCING HYDROGEL MICROSPHERES**

(71) Applicant: HighFly Therapeutics (HK) Limited, Hong Kong (HK)
(72) Inventor: Ellouze, Sami, 92290 Chatenay Malabry (FR); Bremond, Nicolas, 75013 Paris (FR); Bibette, Jérôme, 75009 Paris (FR)
(74) Representative: CH Kilger Anwaltspartnerschaft mbB

(57) **Abstract**

A first aspect of the invention refers to a method for producing a hydrogel microsphere, the method comprising the steps of:
a. generating by means of a capillary a droplet of controlled size of a first fluid in a gaseous phase,
b. dispensing said droplet of a first fluid into a recipient comprising a second fluid, wherein the first fluid is immiscible with the second fluid and wherein the density of the second fluid is lower than the density of the first fluid,
c. contacting the droplet of the first fluid with the second fluid, thereby producing a hydrogel microsphere,
d. recovering the hydrogel microsphere from the second fluid for storage.

A second aspect of the invention is directed to a hydrogel microsphere obtainable by the method according to the first aspect of the invention.

A further aspect of the invention refers to a system for producing a hydrogel microsphere according to any of the second and third aspect.

## Description

### TECHNICAL FIELD

The invention disclosure is in the field of fluidics and polymer chemistry and relates to a method of producing microspheres. Particularly, the invention relates to a method and a system of producing hydrogel microspheres. The invention further encompasses the use of hydrogel microsphere in molecular biology and biochemistry techniques.

### BACKGROUND

Hydrophilic polymers and especially their crosslinked forms, known as hydrogels, are a class of biomaterials that have demonstrated great potential for biological and medical applications. Particularly, hydrogels have attracted wide research interest due to their tunable chemical and three-dimensional physical structure, high water content, good mechanical properties and biocompatibility (Peppas et al. 2003, Adv. Mater. 18:1345-1360).

Microspheres are biopolymer microbeads obtained by gelling a biopolymer forming a matrix-type structure. In general, microspheres are made via the extrusion/dropping method or via the emulsion method. Extrusion or emulsification techniques may be applied to produce spherical polymer beads ranging from 0.3 to 3 mm in diameter (Krasaekoopt et al. 2003, Int. Dairy J., 13:3-13).

The first step in both techniques is mixing of a biological material with a polymer solution to create suspension, which is then extruded through a capillary to produce droplets collected in a bath where gelation occurs (ionotropic or thermal) or dispersed in a continuous phase applying mixing to create stable w/o emulsion.

Brandenberger et al. (Journal of Electrostatics 45 (1999), Monodisperse particle production: A method to prevent, drop coalescence using electrostatic forces) teache a system that has been developed for the immobilization of cells in polymer beads under sterile conditions. Error particles due to droplet coalescence is suppressed.

Schneider et al. (Journal of Applied Physics Volume 38, Number 6 May 1967) teach a theoretical expression for droplet size, radius, and spacing in terms of the jet parameters and applied frequency and they verify this experimentally.

Extrusion is the most common approach to making capsules with hydrocolloids and can be achieved by simply dropping an aqueous solution into a gelling bath. Extrusion bead production techniques (like electrostatic, coaxial-air flow, vibration, atomization or jet-cutter) are based on applying the additional force to generate smaller spheres compare to those produce by simple dropping. The size of the particles can be adjusted by choosing needle diameter and manipulating the distance between the outlet and the polymerization solution and electric parameters. Despite their popularity, the aforementioned conventional methods present some limitations, such as the production of beads exhibiting large particle size distributions, primarily due to problems of coalescence and/or breakage of the suspended droplets. Also, the preparation of uniformly sized polymer beads using known methods is often not suitable for large-scale production. Current jetting methods also suffer from high cost and low production for beads having small particle size, e.g. <300µm. Further, some of these systems require very sophisticated equipment and complex methods for polymer formation, which in some case are limited for small scale applications but not well suited to industrial scale-up.

Further, when using hydrogel beads for entrapping biological material, the production of such beads under aseptic conditions are costly and may limit their use on an industrial scale. In this case, the challenging aspect is to provide a suitable protection for the entrapped active molecules from biodegradation during processing and storage of the hydrogel beads.

Therefore, it would be desirable to provide an efficient and highly productive method for producing hydrogel beads with homogenous size distribution, commonly from 1 µm to 500 µm in diameter, where the limitations associated with conventional methods can be avoided.

### SUMMARY

In view of the above limitations affecting the current methodologies in hydrogel beads preparation, the object of the invention is to provide with an efficient method for producing a hydrogel microsphere entrapping or copolymerizing biological material of interest as well as a system for carrying out the method disclosed herein.

Accordingly, a first aspect of this invention refers to a method for producing a hydrogel microsphere, the method comprising the steps of:
a. generating by means of a capillary a droplet of a controlled size of a first fluid in a gaseous phase,
b. dispensing said droplet of a first fluid into a recipient comprising a second fluid, wherein the first fluid is immiscible with the second fluid and wherein the density of the second fluid is lower than the density of the first fluid,
c. contacting the droplet of the first fluid with the second fluid, thereby producing a hydrogel microsphere,
d. recovering the hydrogel microsphere from the second fluid for storage.

A second aspect of the invention is directed to a hydrogel microsphere obtainable by the method according to the first aspect of the invention.

A third aspect of the invention encompasses a hydrogel microsphere comprising
a. a solid core comprising a specie of first type,
b. optionally, one or more outer solid shell,
wherein each of the one or more outer solid shell comprises a specie of second type.

A fourth aspect of the invention refers to a system for producing a hydrogel microsphere according to any of the second and third aspect, the system comprising:
a. a capillary module injecting a first fluid in a gaseous phase, thereby producing a droplet of a first fluid obtained when the first fluid is ejected from the capillary module,
b. a recipient for collecting the droplet of a first fluid, the recipient comprising a second fluid, wherein the density of the second fluid is lower than the density of the first fluid,
c. reagents for triggering polymerization of the first fluid.

### BRIEF DESCRIPTION OF THE DRAWINGS

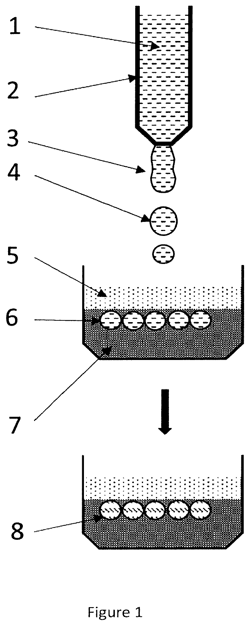

Figure 1 shows one way of carrying out the method according to the invention. As depicted in Figure 1, the capillary (2) forming a jet (3), generates droplets (4) of a first fluid (1). The droplets (4), after crossing a gaseous phase (not shown), enter in contact with a second fluid comprising two different sub-fluids (5, 7) having different densities, which are immiscible with the first fluid (1). The density of the sub-fluid (7) is higher than the one of the first fluid (1) and the density of the sub-fluid (5) is lower than the one of the first fluid (1), thereby determining the suspension of the droplets (6). The droplets (6) are trapped at the interface between the two sub-fluids (5, 7). One of the sub-fluids (7) comprises reagents necessary to trigger the polymerization of the first fluid (1) in the droplets (6). Upon conclusion of the polymerization process of the first fluid (1), the droplets (6) are converted into microspheres (8).

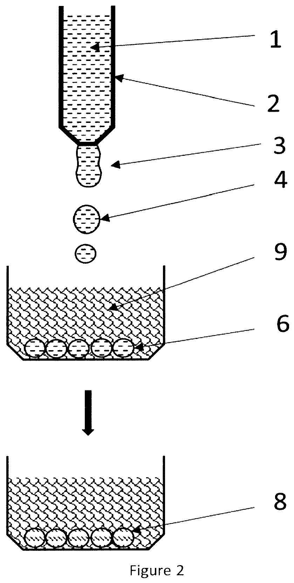

Figure 2 shows another way of carrying out the method according to the invention. As depicted in Figure 2, the capillary (2), forming a jet (3) generates droplets (4) of first fluid (1). The droplets (4), after crossing a gaseous phase (not shown), enter in contact with a second fluid (9), which is immiscible with the first fluid (1). The density of the second fluid (9) is lower than the one of the first fluid (1). The second fluid (9) comprises reagents necessary to trigger the polymerization of the first fluid (1) in the droplets (6). Upon conclusion of the polymerization process of the first fluid (1) in the droplets (6), the droplets (6) are converted into microspheres (8).

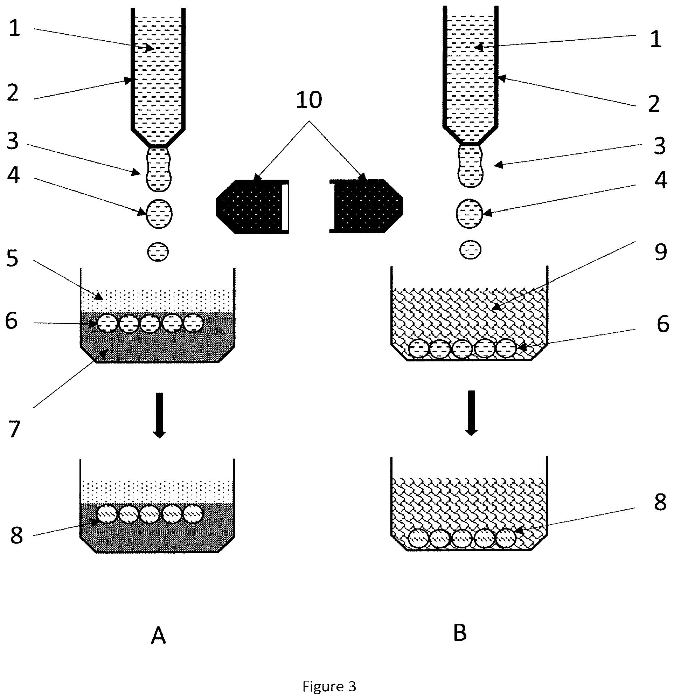

Figure 3 shows a further way of carrying out the method according to the invention. As depicted in Figure 3, the capillary (2) forming a jet (3) generates droplets (4) of first fluid (1). While crossing the gaseous phase (not shown), the droplets (4) are subjected to irradiations generated by a source (10). The irradiation triggers the polymerization process. The droplets (4), after crossing a gaseous phase, enter in contact with a second fluid comprising one sub-fluid (9) or more sub-fluids (5, 7), which is/are immiscible with the first fluid (1). The density of the one sub-fluid (9) is higher than the one of the first fluid (1). In presence of more sub-fluids (5, 7), the density of the first sub-fluid (7) is higher that the one of the first fluid (1). The density of the second sub-fluid (5) is lower than the one of the first fluid (1), thereby determining the suspension of the droplet (6). One of the sub-fluids (5, 7) may comprise reagents necessary to complete the polymerization of the first fluid (1) in the droplets (6). Upon conclusion of the polymerization process of the first fluid (1), the droplets (6) are converted into microspheres (8).

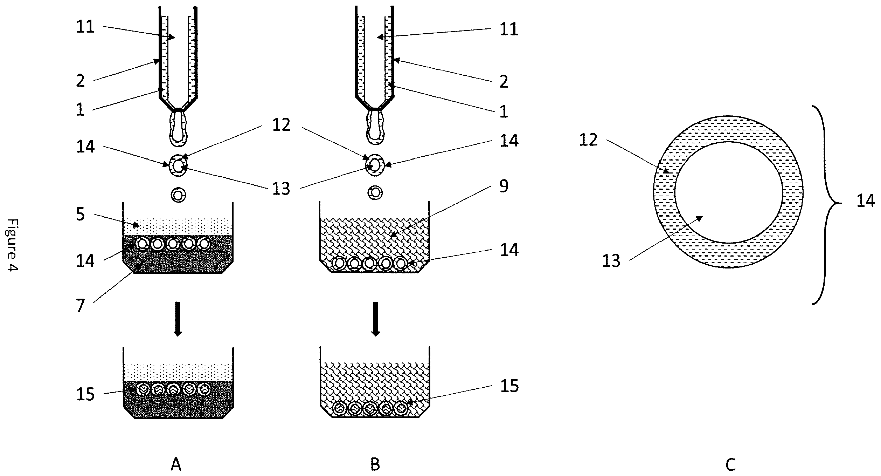

Figures 4A-C shows a further way of carrying out the method according to the invention. As depicted in Figure 4A, the capillary (2) generates droplets (14) of first fluid (1) comprising a two-phase fluid. The droplets (14) comprising a core (13) and a shell (12), after crossing a gaseous phase (not shown), enter in contact with a second fluid comprising two different sub-fluids (5, 7) having different densities, which are immiscible with the first fluid (1). The density of the first sub-fluid (7) is higher that the one of the first fluid (1). The density of the second sub-fluids (5) is lower than the one of the first fluid (1), thereby determining the suspension of the droplet (6). The droplets (14) are trapped at the interface between the two sub-fluids (5, 7). One of the sub-fluids (7) comprises reagents necessary to trigger the polymerization of the core (13) and/or the shell (12) independently to each other. Upon conclusion of the polymerization process of the first fluid (1), the droplets (14) are converted into microspheres (15). As depicted in Figure 4B, the capillary (2) generates droplets (14) of first fluid (1) comprising a two-phase fluid. The droplets (14) comprising a core (13) and a shell (12), after crossing a gaseous phase (not shown), enter in contact with a second fluid (9), which is immiscible with the first fluid (1). The density of the second fluid (9) is lower than the one of the first fluid (1). The second fluid (9) comprises reagents necessary to trigger the polymerization of the core (13) and/or the shell (12) independently to each other. Upon conclusion of the polymerization process of the first fluid (1), the droplets (14) are converted into microspheres (15). Figure 4C depicts a hydrogel microsphere (14) comprising a core (13) and a shell (12).

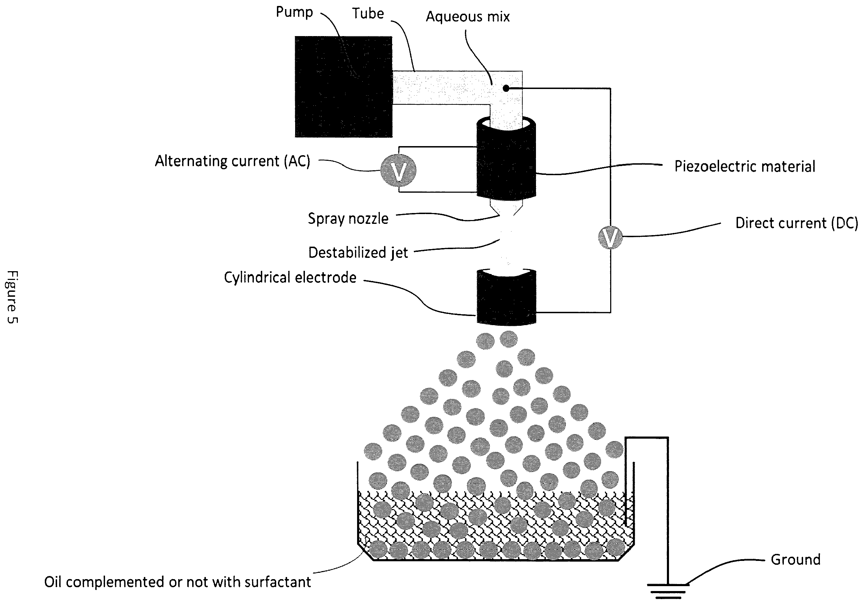

Figure 5 shows a further way of carrying out the method according to the invention. In particular, Figure 5 shows a further way of generating droplets. As depicted in Figure 5, a pump connected to a capillary propels a mixture of aqueous fluid (e.g., non-polymerized gel). The capillary crosses a piezo material connected to an alternative current generator (AC). The piezo material destabilizes the ejected fluid from the capillary and enables the droplet generation having the same size. A cylindrical electrode set to a direct current to charge the droplet is then used to disperse the droplet as a cone. The charged droplets are then dispensed in a recipient containing dodecane complemented or not with surfactant. Finally, the generation of a hydrogel microsphere may occur according to any of the polymerization processes described herein.

### DETAILED DESCRIPTION

Provided here includes a method for fast and reliable fabrication of hydrogel microspheres of controlled sizes and shapes using a capillary for dropping a polymer solution and a separate bath, wherein gelification/polymerization process of the polymeric solution occurs.

In a first aspect the invention provides a method for producing a hydrogel microsphere, the method comprising the steps of:
a. generating by means of a capillary a droplet of controlled size of a first fluid in a gaseous phase,
b. dispensing said droplet of a first fluid into a recipient comprising a second fluid, wherein the first fluid is immiscible with the second fluid and wherein the density of the second fluid is lower than the density of the first fluid,
c. contacting the droplet of the first fluid with the second fluid, thereby producing a hydrogel microsphere,
d. recovering the hydrogel microsphere from the second fluid for storage.

In the context of the invention, the term "microsphere" refers to a solid particle of biopolymer gel network (hydrogel), particularly, although not essentially, to a spherical particle, having a diameter ranging from 1 µm to 500 µm, preferably from 30 to 150, more preferably from 45 to 75 µm. For non-spherical particles, the diameter is intended to the maximum dimension of the particle. As used herein, the terms "microsphere" and "bead" can be used interchangeably.

The microspheres according to the invention are biocompatible, hydrophilic and non-toxic and comprise at least one high water absorbing or superabsorbant polymer that is cross-linked, such as a hydrogel. The term "hydrogel" as used herein refers to a water-swellable gel.

In one embodiment, the first fluid comprises a monomer which can polymerize under specific conditions. As used herein, the term "monomer" refers to a reactive component that is polymerizable by exposure to radiation or by means of polymerization activator and/or initiator reagent. The term "monomer" is also defined in Jenkins et al. 1996, Glossary of basic terms in polymer science, Pure Appl. Chem. 68(12):2287-2311.

The monomer or monomeric material of the invention includes, but is not limited to, an acrylic monomer, a polyacrylamide monomer, a polyvinlyacetate monomer or copolymer thereof.

In one embodiment, the monomer or monomeric material is substantially hydrophilic. This means the microspheres contain at least one hydrophilic monomer, but it may also include the presence of hydrophobic monomers or copolymers as long as the overall characteristic of the microsphere are substantially hydrophilic rather than hydrophobic.

In one embodiment of the invention, the first fluid and/or the second fluid comprise(s) a surfactant. The presence of the surfactant in the first fluid aims to be quickly relocalized at the surface of dispensed droplet. The presence of the surfactant in the second fluid is intended to limit the coalescence. In the context of the invention, the term "surfactant" refers for the first fluid to a ionic surfactant, and for the second fluid to non-ionic surfactant showing a Hydrophilic Lipophilic Balance (HLB) value between 1 and 10. The HLB of a surfactant is calculated according to the method disclosed in Griffin W.C. 1954, Calculation of HLB values of non-ionic surfactants, J. Soc. Cosmet. Chem. 5(4):249-256. Non-limiting examples of suitable surfactants are sorbitan fatty acid esters (Spans) having low HLB values, e.g., Span 20, Span 40, Span 60, Span 65, Span 80, Span 85. A further example of suitable surfactant is ABIL® EM 90 (Cetyl PEG/PPG-10/1 Dimethicone), a non-ionic W/O emulsifier which is based on silicone.

The term "droplet" as used herein refers to an isolated portion of a first fluid surrounded by another fluid, such as a gaseous fluid or liquid fluid. The droplets may be spherical, substantially spherical or having other irregular shapes, depending on the external environment.

The term "capillary" as used herein refers to a tube, a channel or other structure capable of transporting a fluid. The geometry of a capillary may include tubes with circular, rectangular or squared cross-sections and may be fabricated by a wide range of technologies. In some cases, the inside surface of the capillary may be chemically modified in order to optimize its surface properties.

The capillary used herein is part of a system comprising different modules. In particular, the capillary (or capillary module) is connected to a pump module forcing the fluid comprised in the capillary to be extruded through a needle in order to produce droplets.

In the context of the invention, the steps of generating and dispensing a droplet can be both controlled by a common force, e.g., a pump, which imposes a force and a flow rate required for droplet generation and dispensation. Alternatively, the steps of generating and dispensing a droplet can be controlled by different forces, e.g., the pulse of a piezo material generates the droplet and the dispensing step is governed by gravity. As used herein, the terms "gravity" refers to the gravitational force and relates to the force exerted upon an object due to gravity.

Once the droplet of first fluid is extruded by the capillary (dispensing step), it crosses a gaseous phase for a determined time of flight before contacting the second fluid comprised in a recipient bath. In the context of the invention, the term "gaseous phase" refers to gaseous fluids, such as air, vapour or any other gas.

In one embodiment, the dispensing step comprises the step of crossing a gaseous phase before the droplet of a first fluid contacts the second fluid.

The distance between the tip of the capillary and the surface of the second fluid comprised in the recipient is sufficient to allow the conversion between the fluid jet and droplet.

After extrusion from the capillary, the droplet shows a controlled size. As used herein, the term "controlled size" refers to a homogeneous volume of the ejected droplets. This value is independent on the shape of the droplets. The size of the droplets can be determined, for example, by measuring the average diameter or other characteristic dimension of the droplets. The "average diameter" of a population of droplets refers to the arithmetic average of the diameters of the droplets. A person skilled in the art knows how to determine the average diameter of a population of droplets, for example, using laser light scattering or other known techniques.

The inventors have found that by applying an electrical field to the first fluid it is possible to control the size of the droplet. The voltage applied on the piezo material destabilizes the jet of the first fluid and confers to the ejected droplets a regular size at high frequency.

The claimed method thus leads to higher throughput in a controlled manner.

In one embodiment, the method further comprises an additional step wherein the first fluid (1) and/or the droplet crosses an electrical field.

In another embodiment, the step of crossing the gaseous phase optionally comprises the use of radiation selected from the group comprising UV, microwave and infrared.

It has been found that the use of radiation during the time of flight of the droplet can advantageously trigger the polymerization process of the droplet before the droplet contacts the second fluid.

In one embodiment of the first aspect, the first fluid comprises at least one specie selected form the group comprising protein, polyethylene glycol, polysaccharide and derivative thereof. Non-limiting example of species comprised in the first fluid are alginate, chitosan, agarose, hyaluronic acid, polyethylene glycol (PEG) derivatives (PEG azide, PEG alkyne, PEG acrylate, PEG diacrylate, PEG thiol), acrylamide, acrylamide derivatives, elastin, fibrin, collagen and gelatin.

As used herein the term "fluid" refers to any substance that is capable of flowing, such as liquids or emulsions. In some embodiments, the fluid may a water-based fluid, oil-based fluid, a water-in-oil emulsion or an oil-in-water emulsion.

The droplet comprising a first fluid according to the invention is subjected to a polymerization process to form a hydrogel microsphere, where the microsphere contains a particle, proteins, cell, DNA, RNA, metabolite, chemical compound or other suitable species. As used herein, the terms "polymerization" and "gelification" can be used interchangeably.

In another embodiment, during the dispensing and contacting steps, the droplet optionally comprises an external fluid layer.

The presence of the external fluid layer, which can be permanent or temporary, is intended to protect the droplet during polymerization process and prevent the coalescence effect.

In the context of the invention, the external fluid layer is made, for example, of alginate. The physical property of alginate is controlled by the calcium concentration comprised in the second fluid.

Methods for producing an external fluid layer coating the extruded droplet are known in the art. The coated droplet can be obtained, for example, by coextrusion of two or more immiscible fluids through concentric nozzles or by in-air encapsulation method (Alessandri et al. 2013, PNAS 110(37):14843-14848; Visser et al. 2018, Sci. Adv. 4(1):eaao1175).

The step of "contacting the droplet of the first fluid with the second fluid" refers to the incorporation of the droplet comprising a first fluid within the second fluid.

The interface between the surface of the droplet and the second fluid provide a surface of exchange, which allows reagents such as polymerization activator and/or initiator reagent comprised in the second fluid to interact with the species comprised in the first fluid and thereby triggering the polymerization process of the specie.

The hydrogel microspheres of the invention are obtained by polymerization of droplets of a first fluid in a solution comprising a second fluid, which is immiscible with the first fluid and create a suspension of the hydrogel in a said second fluid.

Hydrogel microspheres can then be collected by filtration or centrifugation, washed, and optionally sterilized. Since suspension polymerization starts from dispersed droplets, spherical microspheres will be obtained after polymerization.

As the first fluid may contain a particles, proteins, cell, DNA, RNA, metabolite, chemical compound or other suitable species, the recovery of hydrogel micropsheres can be a complex process. In most cases, the microspheres are purified using selective solubilization or extraction. Exemplary methods for recovering bioparticles are disclosed in van Hee et al. 2006, Biotechnology and Bioengineering, 94(4): 689-709.

In one embodiment, the first fluid comprises at least one specie selected form the group comprising protein, polyethylene glycol, polysaccharide, acrylamide and derivative thereof.

The second fluid disclosed herein can comprise one or more different sub-fluids.

As used herein, the term "sub-fluid" refers to any fluid not miscible with the first fluid. As a non-limiting example, the sub-fluid can be an oil or its derivative.

In one embodiment, the second fluid comprises one sub-fluid selected from the group comprising naturally occurring oil, synthetic oil and a mixture thereof.

In another embodiment, the second fluid comprises two sub-fluids selected form the group comprising naturally occurring oil, synthetic oil, wherein the two sub-fluids have different densities.

In one embodiment, the two sub-fluids are immiscible.

In one embodiment, the contacting step comprises an incubation step at controlled temperature.

During this incubation step, the polymerization process is carried out at a temperature ranging between about 20°C and about 90°C in the presence of a polymerization activator/initiator reagent. The temperature and incubation time are variable parameters and depend on the monomer molecule subjected to polymerization. For example, the polymerization temperature is 65°C, when the monomer is acrylamide.

Similarly, the polymerization process is triggered by an activator and/or initiator reagent which can be suitably chosen in view of the monomer molecule subjected to polymerization. When the monomer molecule is acrylamide a polymerization activator and/or initiator reagent selected from the group comprising TEMED, riboflavin, ammonium persulfate (APS).

In one embodiment, the first fluid comprises a polymerization activator and/or initiator reagent selected from the group comprising TEMED, riboflavin, ammonium persulfate (APS). Preferably, the polymerization activator/initiator reagent is advantageously chosen among the ammonium persulfate (APS) and tetramethylethylenediamine (TEMED).

In one embodiment, the second fluid comprises a polymerization activator and/or initiator reagent selected from the group comprising TEMED, riboflavin, ammonium persulfate (APS). Preferably, the polymerization activator/initiator reagent is advantageously chosen among the ammonium persulfate (APS) and tetramethylethylenediamine (TEMED).

Riboflavin is a well-known photopolymerization reagent in PAGE by forming free radicals in aqueous solution in the presence of light. The catalysts TEMED or DMAPN are commonly added to speed up the free radical formation. The free radicals will trigger acrylamide polymerization.

When the second fluid comprises two sub-fluids, one or both sub-fluids of the second fluid may comprise a polymerization activator and/or initiator reagent.

The hydrogel microspheres thus obtained can then be recovered by known method in the art such as decanting and filtration and subjected to washing steps to eliminate any contamination before their storage.

In another embodiment, the droplet of the first fluid comprises an electrical charge.

In the context of the present invention, the term "electrical charge" refers the output of an electrical discharge unit that delivers an electric current through the air to the surface of the first fluid. The electrical charge may be delivered via an electrode or other suitable delivery source that is attached to the electrical discharge unit.

In one embodiment, the first fluid comprises additional fluids (e.g., a third, a fourth, a fifth fluid) surrounding the first fluid which flow in same direction, parallel and concentric with respect to the first fluid within the capillary.

In another embodiment, each additional fluid(s) comprises a single specie independently selected form the group comprising a particle, a protein, a cell, a DNA, a RNA, a metabolite, a chemical compound.

According to a second aspect, the invention provides a hydrogel microsphere obtainable by the method according to the first aspect.

In other embodiments, the hydrogel microspheres produced according the method disclosed herein are uniform in size.

The hydrogel microsphere obtained by using the method disclosed herein can present a simple structure which is represented by a polymerized first fluid entrapping a single specie (e.g., a protein, a single cell, a DNA, a RNA, a metabolite, a chemical compound) as well as a more complex structure, wherein different species comprised in the additional fluids can be entrapped in the corresponding polymerized additional fluids. Accordingly, when one or more fluids flow in the capillary along with the first fluid the resulting droplet ejected from the capillary and the corresponding hydrogel microsphere can have a multi-layer structure (e.g., a core-shell structure) wherein each layer comprises a single specie.

In view of their unique structure, the hydrogel microspheres disclosed herein can find different applications. Non-limiting examples of applications of the hydrogel microsphere are methods for DNA/RNA sequencing disclosed in U.S. patent application No. 2018/0304222 A1 and/or genotyping single cells disclosed in the international PCT application No. 2018/167218 A1.

In another aspect of the invention, the hydrogel microsphere comprises:
a. a solid core comprising a specie of first type,
b. optionally, one or more outer solid shell,
wherein each of the one or more outer solid shell comprises a specie of second type.

In the context of the invention, the hydrogel microsphere can be obtained by the method disclosed herein. The hydrogel microsphere can be intended as a bead comprising a specie of first type.

In some embodiment, the hydrogel microsphere comprises a central portion (solid core) optionally surrounded by one or more outer solid shell comprising a specie of second type.

As used herein, the terms "core" and "shell" are only intended to identify different portion of the bead, wherein the "core" is surrounded by one or more "shell." As used herein, the terms "solid shell" and "solid core" refers to a portion of polymerized material.

In another embodiment, the specie of first and second type is independently selected from the group comprising a particle, a protein, a cell, DNA, RNA, a metabolite, a chemical compound and a combination thereof.

As used herein, the term "chemical compound" refers to a molecule aiming to generate a network or gel organized as a gel under activation provided by an external reactant such as polymerization inducers (e.g., initiators, catalysts) and/or an external influence like UV, temperature, acoustic wave, pressure.

As used herein, the term "metabolite" refers to a compound obtained from chemical changes of a biomolecule in living organisms. For example, if the biomolecule is a carbohydrate, a metabolite may be a glucide or the like.

The hydrogel microspheres according to the invention can be composed by several species. For example, a microsphere may be hardened to form a gel, where the microsphere contains a particle, proteins, a cell, DNA, RNA, metabolite, chemical compound, other suitable species or a composition of particles, proteins, cell, DNA, RNA, metabolite, chemical compound or other suitable species.

One advantage of the hydrogel microsphere comprising a core/shell structure lies in the multi-layer structure itself having different properties. The hydrogel microsphere may be exposed to a reactant, which may interact directly with the microsphere or with the particles, proteins, cell, DNA, RNA, metabolite, chemical compound. For example, the particles or proteins may be subjected to specific binding of various molecules. As a specific example, DNA contained within a gel particle may be subjected to ligation, polymerase chain reaction (PCR) amplification or any type of common molecular biology reaction. After the molecular biology reaction, molecules, typically DNA, are added to the hydrogel through, but not limited to, crosslinking or hydrogen bonds. A hydrogel microsphere having bound DNA or other molecules may be formed in one embodiment of the invention. Another example is the interaction between protein, particles, cell or any other species which might interact with another external species of the same type or of different types. The invention describes several method aiming to produce such microspheres with and without particles, proteins, cell, DNA, RNA, metabolite, compound or other suitable species using capillary for mix injection.

As used herein, the term "particle" refers to a microparticle comprising a gel particle such as, for example, a hydrogel particle, a polymeric particle, a magnetic particle, a photoactivable particle, a X-ray activable particle or a light activable particle.

In another aspect, the invention provides a system for producing a hydrogel microsphere disclosed herein, the system comprising:
a. a capillary module injecting a first fluid in a gaseous phase, thereby producing a droplet of a first fluid obtained when the first fluid is ejected from the capillary module,
b. a recipient disconnected from the capillary module for collecting the droplet of a first fluid, the recipient comprising a second fluid, wherein the density of the second fluid is lower than the density of the first fluid,
c. reagents for triggering polymerization of the first fluid.

In another embodiment, the system according to the invention further comprises:
d. a pump module,
e. a reservoir module and
f. a detector module.

The pump module provides a controlled pressure to generate a controlled flow rate of the first fluid. The pump module also controls the injection and/or aspiration of the first fluid.

A tubing system connects the pump module to the capillary module. The tubing system is also connected to a reservoir module.

In another embodiment, the system according to the invention further comprises:
g. piezoelectric material incorporated inside the capillary
h. conductive ring connected to a voltage amplifier,
i. a recipient.

The amplifier is commonly connected to a generator of function.

The generation of microsphere properties is monitored by an external module. The detection is commonly performed using microscope or any other sensors known in the art.

As used herein, the term "recipient" refers to a container or vessel intended to contain the second fluid, wherein the polymerization of the droplets of first fluid into hydrogel microsphere occurs. Therefore, the recipient is also intended to collect droplets of the first fluid as well as hydrogel microspheres. The temperature in the container can be controlled or not.

The hydrogel microsphere obtained according to the method of the invention finds extensive applications. A non-limiting example of the application of the hydrogel microsphere disclosed herein is in microfluidics for carrying out biological reactions.

### EXAMPLES

### Example 1

### Gel mix composition:

### Acrylamide gel chemistry

| **Reagent** | **Final concentration** |
|---|---|
| **10 mM Tris-HCl [pH 7.6]** | 10 mM |
| **1 mM EDTA** | 1 mM |
| **15 mM NaCl** | 15 mM |
| **Acrylamide** | 6.20 % |
| **(v/v) bis-acrylamide** | 0.18 % |
| (**w/v) ammonium persulfate 20%**** | 0.30 % |
| **Streptavidin acrylamide*** | 2 mg/mL |

| | |
|---|---|
| * Streptavidin acrylamide is aiming to provide a specific function to the gel. This reagent can be changed to adapt the function and replace the streptavidin by DNA, modified DNA with chemical group, chemical function, proteins but not limited to. This reagent is copolymerized in the acrylamide gel or could be simply captured inside the gel. | |

### Oil mix composition in the gelling bath:

- Hydrocarbon oil (density lower than gel mix composition, typically dodecane, density 750 kg/m³; Water is 997 kg/m³)
- Surfactant => Span 85 or Agil EM 90 from 0,01 to 20%
- TEMED => 0.004% to 2%, preferably 0.04 %
** APS can be replaced by riboflavin as photo-initiator during the microsphere generation.

### Gelling bath

The formed microspheres are collected inside a collector containing dodecane complemented with surfactant (e.g., Span85).

The droplets are induced in polymerization with the two reactants ammonium persulfate (APS) comprised in the droplet and tetramethylethylenediamine (TEMED) dispersed in the dodecane. The TEMED is naturally diffusing inside the droplet. The gelling bath is maintained at 65°C to initiate the polymerization or can be moved at the end of the droplet generation to allow the temperature control incubation.

### System setup

The gel mix is prepared and injected through the system using a pump controlling the flow rate through the capillary. The flow rate is then applied to continuously flowing liquid inside the system. The piezo is then switched on to regulate the frequency and the droplet size during the droplet generation step.

An electric filed is then applied between the oiled bath and the piezo material to increase the dispersion of the droplet forming a cone and limit the coalescence before the impact or entry into the collecting bath.

### Example 2

The experiment disclosed hereinafter and referred to Figure 5 provides with an alternative way of generating the hydrogel microsphere according to the invention.

### Droplet generation mode:

**Mode continuous:** a jet is generated using a continuous pushing of aqueous phase using a pump. The jet is formed at the nozzle and is destabilized by a piezoelectric material aiming to facilitate and stabilize the droplet generation.

**Drop on demand:** the piezoelectric material can be used to pushed out a droplet mediated by a pulse imposed. The droplet generation is then not triggered by the jet but only by a regular switch on/off the piezo material.

## Claims

1. A method for producing a hydrogel microsphere, the method comprising the steps of:
a. generating by means of a capillary a droplet of controlled size of a first fluid in a gaseous phase,
b. dispensing said droplet of a first fluid into a recipient comprising a second fluid, wherein the first fluid is immiscible with the second fluid and wherein the density of the second fluid is lower than the density of the first fluid,
c. contacting the droplet of the first fluid with the second fluid, thereby producing a hydrogel microsphere,
d. recovering the hydrogel microsphere from the second fluid for storage.

2. The method according to claim 1, wherein the dispensing step comprises the step of crossing a gaseous phase before the droplet of a first fluid contacts the second fluid.

3. The method according to claim 2, wherein the step of crossing the gaseous phase optionally comprises the use of radiation selected from the group comprising UV, microwave and infrared.

4. The method according to any of the claims 1 to 3, wherein the first fluid comprises at least one specie selected form the group comprising protein, polyethylene glycol, polysaccharide, acrylamide and derivative thereof.

5. The method according to any of the claims 1 to 4, wherein the second fluid comprises one sub-fluid selected from the group comprising naturally occurring oil, synthetic oil and a mixture thereof.

6. The method according to any of the claims 1 to 4, wherein the second fluid comprises two sub-fluids selected form the group comprising naturally occurring oil, synthetic oil, wherein the two sub-fluids have different densities.

7. The method according to claim 6, wherein the two sub-fluids are immiscible.

8. The method according to any of the claims 1 to 7, wherein the second fluid comprises a polymerization activator and/or initiator reagent selected from the group comprising TEMED, riboflavin, ammonium persulfate.

9. The method according to any of the claims 1 to 7, wherein the first fluid comprises a polymerization activator and/or initiator reagent selected from the group comprising TEMED, riboflavin, ammonium persulfate.

10. The method according to any of the claims 1 to 9, wherein the contacting step comprises an incubation step at controlled temperature.

11. The method according to any of the claims 1 to 10, wherein the droplet of the first fluid comprises an electrical charge.

12. A hydrogel microsphere obtainable by the method according to any of the claims 1 to 11.

13. A hydrogel microsphere comprising:
a. a solid core comprising a specie of first type,
b. optionally, one or more outer solid shell,
wherein each of the one or more outer solid shell comprises a specie of second type.

14. The hydrogel microsphere according to claim 13, wherein the specie of first and second type is independently selected from the group comprising a particle, a protein, a cell, DNA, RNA, a metabolite, a chemical compound and a combination thereof.

15. A system for producing a hydrogel microsphere according to any of the claims 12 and 13, the system comprising:
a. a capillary module injecting a first fluid in a gaseous phase, thereby producing a droplet of a first fluid obtained when the first fluid is ejected from the capillary module,
b. a recipient disconnected from the capillary module for collecting the droplet of a first fluid, the recipient comprising a second fluid, wherein the density of the second fluid is lower than the density of the first fluid,
c. reagents for triggering polymerization of the first fluid.
